# EUROPEAN PATENT SPECIFICATION

(11) **EP 3 474 965 B1**
(45) Date of publication and mention of the grant of the patent: **02.09.2026**
(21) Application number: 17816342.4
(22) Date of filing: 23.06.2017
(51) Int. Cl.: B01D 27/06, B01D 29/07, B01D 29/56, B01D 39/14, B01D 46/10, B01D 46/12, B01D 46/52

(54) **COMPOUND AIR FILTERS AND METHODS THEREOF**
ZUSAMMENGESETZTE LUFTFILTER UND VERFAHREN DAFÜR
FILTRES À AIR CONTENANT DES COMPOSÉS ET PROCÉDÉS ASSOCIÉS AUXDITS FILTRES

(30) Priority: 24.06.2016 US 201662354549 P
(43) Date of publication of application: 01.05.2019
(73) Proprietor: K & N Engineering, Inc., Riverside, CA 92507 (US)
(72) Inventor: WALL, Jere, James, Helendale, CA 92342 (US)
(74) Representative: Gevers Patents
(86) International application number: PCT/US2017/039124
(87) International publication number: WO 2017/223521

(56) References cited:
- EP-A1- 1 952 869
- WO-A1-96/33001
- DE-U1- 20 115 642
- US-A- 4 978 372
- US-A- 5 549 735
- US-A- 5 902 361
- US-A- 6 156 089
- US-A1- 2006 021 302
- US-A1- 2007 180 803
- US-A1- 2009 029 957
- US-A1- 2010 269 468
- US-A1- 2011 146 490
- US-B1- 6 315 805
- US-B1- 6 824 581
- US-B2- 9 266 048

## Description

### BACKGROUND

An air filter designed to remove particulate matter from an airstream generally is a device including fibrous materials. These fibrous materials can remove solid particulates such as dust, pollen, mold, and bacteria from an airstream. Air filters are used in applications where air quality is important, notably in air-filtering systems such as heating, ventilation, and air conditioning (HVAC) systems of vehicles. Such air-filtering systems generally operate to provide optimal interior air quality to occupants within interior spaces of vehicles by removing particle contaminants by way of filtration of air. US 6 824 581 B1 discloses a filter element having a filter media with embossed spacers which allow for cross flow of dirty air into the filter media. US 2006/021302 A1 discloses an air filter that incorporates at least one prophylactic compound useful in reducing the number of microbial organisms. As will be appreciated, the effectiveness of an air-filtering system to provide an optimal interior air quality depends largely on an ability of an air filter within the air-filtering system to remove particle contaminants from the air within the vehicle.

A drawback to conventional air filters, particularly air filters including pleats, is that as the number or density of pleats increases, the ability to maintain a uniform distribution of the pleats within the air filter generally decreases. Even light forces applied to a densely pleated air filter, either from handling during installation of the air filter or from air flow pressure during use, can dent or bend the pleats out of position. When pleats are compressed together the surface area of the air filter is effectively decreased, along with the efficiency of the filter. This decrease in efficiency can reduce the effective life of an air filter prompting the air filter to be discarded prematurely in an effort to increase air-system system airflow and decrease operation costs. Considering the innumerable number of vehicles with air-filtering systems throughout the world, the volume of discarded air filters that could be eliminated from landfills is staggering.

What is needed, therefore, is a compound air filter that is configured to maintain a uniform distribution of pleats, during installation and use, in order to maximize surface area and overall efficiency of the filter.

### SUMMARY

Provided herein, in one aspect, is an air filter as defined by claim 1.

In such embodiments, each outer-pleat fold of the outer-pleat folds can be coupled to the second media layer along an entire length of the outer-pleat fold.

In such embodiments, each inner-pleat fold of the inner-pleat folds can be coupled to the support frame at both ends of the inner-pleat fold.

In such embodiments, the support frame includes a molded rim along a perimeter of the filter medium. The rim can be configured for seating the air filter in an air-filtering system.

In such embodiments, the support frame can further include a wire mesh fixed in the rim. The wire mesh can be configured to provide structural integrity to the support frame without obstructing air streamed through the air filter.

In such embodiments, the air filter can be configured to stream air through the air filter in a direction from the support frame to the second media layer.

In such embodiments, the first media layer can include a plurality of bosses embossed in the first media layer between each inner-pleat fold of the inner-pleat folds and an adjacent outer-pleat fold of the outer-pleat folds.

In such embodiments, the plurality of bosses can be configured with a shape and orientation to provide structural integrity to the first media layer in the pleated configuration without obstructing air streamed through the air filter.

In such embodiments, the compound filter medium can be configured to sequester airborne contaminants selected from particulate matter, volatile organic compounds, and combinations thereof from air streamed through the filter medium.

Also described herein, in some embodiments, is an air filter configured for a HVAC system of a vehicle including a compound filter medium and a support frame configured to support the compound filter medium. The compound filter medium can include a first media layer and a second media layer. The first media layer can be formed into a pleated configuration including a plurality of accordion pleats and a plurality of bosses embossed in the plurality of pleats. The first media layer can be disposed between the second media layer and the support frame, wherein inner-pleat folds of the plurality of pleats can be coupled to the support frame at both ends of each of the inner-pleat folds, and wherein outer-pleat folds of the plurality of pleats can be coupled to the second media layer along an entire length of each of the outer-pleat folds. The plurality of bosses can be set-wise embossed in the first media layer between each inner-pleat fold of the inner-pleat folds and an adjacent outer-pleat fold of the outer-pleat folds. The plurality of bosses can also be configured with a common shape and orientation to provide structural integrity to the first media layer in the pleated configuration. The air filter can be configured to stream air through the air filter in a direction from the support frame to the second media layer to sequester airborne contaminants from the air.

In such embodiments, at least one layer of the first media layer and the second media layer can be configured to sequester volatile organic compounds from the air.

In such embodiments, at least one layer of the first media layer and the second media layer can include an electrostatic component configured to sequester particulate matter from the air.

In such embodiments, the first media layer can be a textile, paper, cotton, spun fiberglass, foam, or a combination thereof.

In such embodiments, the second media layer can be a textile, a woven synthetic material, a woven natural material, woven cotton, or a combination thereof.

In such embodiments, the support frame includes a molded rim along a perimeter of the compound filter medium and a wire mesh. The molded rim can be configured for seating the air filter in an air-filtering system. The wire mesh can be fixed in the rim to provide structural integrity to the support frame without obstructing air streamed through the air filter.

In such embodiments, the rim can be silicone rubber, foam rubber, or integral skin polyurethane foam.

Also provided is a method as defined by claim 8.

In such embodiments, coupling the second media layer to the first media layer can include adhering the outer-pleat folds of the plurality of pleats to the second media layer either continuously or at discrete points along an entire length of each of the outer-pleat folds. Coupling the compound filter medium to the support frame can include adhering the inner-pleat folds of the plurality of pleats to the support frame at both ends of each of the inner-pleat folds.

The method includes embossing the first media layer with a plurality of bosses configured with a shape and orientation to provide structural integrity to the first media layer in the pleated configuration without obstructing air streamed through the air filter.

In such embodiments, the method can further include pleating the first media layer into the pleated configuration such that the plurality of bosses are set-wise embossed in the first media layer between each inner-pleat fold of the inner-pleat folds and an adjacent outer-pleat fold of the outer-pleat folds.

These and other features of the concepts provided herein might be better understood with reference to the drawings, description, and appended claims.

### DRAWINGS

FIG. 1 illustrates a downstream perspective view of an air filter configured for use in an air-filtering system of a vehicle in accordance with some embodiments.
FIG. 2 illustrates an upstream perspective view of an air filter configured for use in an air-filtering system of a vehicle in accordance with some embodiments.
FIG. 3 is a side view of the air filter shown in FIGS. 1 and 2, illustrating a direction of airflow through the air filter in accordance with some embodiments.
FIG. 4 is a side view of the air filter shown in FIGS. 1 and 2, illustrating a direction of airflow through the air filter in accordance with some embodiments.
FIG. 5 illustrates a close-up view of a plurality of pleats of the air filter of FIGS. 1 and 2 in accordance with some embodiments.
FIG. 6 illustrates an air filter in an air-filtering system of a vehicle in accordance with some embodiments.

While the concepts provided herein are subject to various modifications and alternative forms, specific embodiments thereof have been shown by way of example in the drawings and will be described herein in detail.

### DESCRIPTION

In the following description, numerous specific details are set forth in order to provide a thorough understanding of the concepts provided herein. It will be apparent, however, to one of ordinary skill in the art that the concepts provided herein can be practiced without these specific details. In other instances, specific numeric references such as "a first media layer," can be made. However, the specific numeric reference should not be interpreted as a literal sequential order but rather interpreted that the "first media layer" is different than a "second media layer." Thus, the specific details set forth are merely examples. The term "coupled" is defined as meaning connected either directly to the component or indirectly to the component through another component. Further, as used herein, the terms "about," "approximately," or "substantially" for any numerical values or ranges indicate a suitable dimensional tolerance that allows the part or collection of components to function for its intended purpose as described herein.

In accordance with that set forth above, a compound air filter is needed that is configured to maintain a uniform distribution of pleats, during installation and use, in order to maximize surface area and overall efficiency of the filter. As such, a compound air filter is provided herein including, in some embodiments, a compound filter medium configured to sequester airborne contaminants from air streamed through the filter medium and a support frame configured to support the filter medium. The compound filter medium can include a first media layer and a second media layer. The first media layer can be formed into a pleated configuration including a plurality of pleats. The first media layer can be disposed between the second media layer and the support frame, wherein inner-pleat folds of the plurality of pleats can be coupled to the support frame, and wherein outer-pleat folds of the plurality of pleats can be coupled to the second media layer.

Such a compound air filter is described for sequestering airborne contaminants from air within, for example, residential or commercial spaces, as well as within any of various types of vehicle. The air filter can include a support frame having a shape and size suitable to orient the air filter within an air-filtering system. A filter medium can be retained within the support frame and configured to remove the airborne contaminants from air flowing through the air filtering. The support frame can include a single molded rim disposed along a perimeter of the filter medium and can be configured to orient the filter medium within an air-filtering system, such that air flowing through the air-filtering system is passed through the filter medium. The air filter can include a wire support incorporated into the air filter and configured to provide strength and durability to the air filter. The filter medium can include a combination of one or more media layers configured to exhibit a relatively high filtration efficiency and a relatively low air pressure drop across the filter medium. The filter medium can include a plurality of pleats so as to increase the surface area of the filter medium. The air filter can also include a support layer configured to maintain a uniform distribution of the pleats.

Although embodiments of the compound air filters can be described and illustrated herein in terms of a rectangular air filter, it should be understood that the compound air filters are not limited to the exact embodiments or shapes illustrated, but rather the compound air filters can include a wide variety of generally rectangular shapes, generally square, circular, oval, round, curved, conical, or other closed perimeter shape that will become apparent.

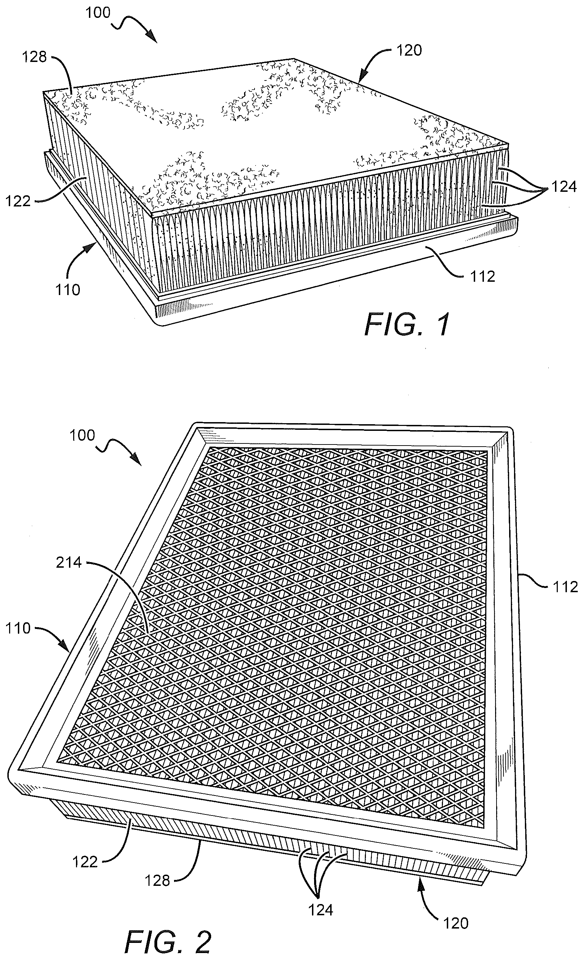

FIGS. 1 and 2 illustrate an embodiment of an air filter 100 that is configured for use in embodiments of the air-filtering system incorporated into a vehicle. The air filter 100 includes a support frame 110 having a shape and size suitable to support a filter medium 120 and seat the air filter within an air-filtering system. A filter medium 120 is retained within the support frame 110 and configured to remove airborne contaminants from air flowing through the air filter. The support frame 110 can include a single molded rim 112 that is disposed along a perimeter of the filter medium 120, wherein the rim is configured for seating the air filter in an air-filtering system. It is understood that the molded rim 112 can be formed from molded foam rubber, silicone rubber, integral skin polyurethane foam rubber; or any of various similar materials that are known in the art.

In some embodiments, the support frame 110 include a plurality of elongate sections and corner sections suitably assembled along a perimeter of the filter medium to orient the air filter 100 within an air-filtering system.

As best shown in FIG. 2, the air filter 100 can include a wire mesh 214 that is incorporated (e.g., molded such as by overmolding) into the air filter 100 and configured to provide strength, structural integrity, durability, or a combination thereof to the support frame 110 and the air filter 100 itself without obstructing air streamed through the air filter 100. Although the wire mesh 214 shown in FIG. 2 is molded into the support frame 110, it should be.understood that the wire mesh 214 can be fixed or coupled with the support frame 110 by way of any of various techniques that are known in the art. Further, it should be recognized that the size of mesh of the wire mesh 214 can be varied from that shown in FIG. 2, based on design choice.

In some embodiments two or more layers of wire mesh can be used to provide relatively greater support to the air filter 100. For example, one or more layers of wire mesh can be disposed in front of, behind, or within the filter medium 120 with respect to the direction of airflow. It is contemplated that situating one or more layers of wire mesh 214 in front of the filter medium 120; with respect to the direction of airflow, can operate to catch larger particulate matter, thereby removing this particulate matter from the airstream prior to passing into filter medium 120.

It is contemplated that any of a variety of fasteners or structures can be implemented so as to retain the filter medium 120 within the support frame 110. In some embodiments, for example, the support frame 110 can include a grate, or a similar structure, which encloses the filter medium 120 within the support frame 110 without restricting airflow through the filter medium 120. In some embodiments, the filter medium 120 can be coupled with a wire support, for example the wire mesh 214, that is configured to resist bowing of the filter medium due to the airstream passing therethrough. For example, the filter medium 120 can be disposed between a first wire support and a second wire support. The first and second wire supports can include a rigid material, such as, by way of non-limiting example, any of various suitable plastics or metals.

In some embodiments, the molded rim 112 can be molded directly onto the edges of the filter medium 120 so as to retain the filter medium within the support frame 110. In some embodiments, the molded rim 112 can be molded onto a first support layer, such as the wire mesh 214, a second support layer, the filter medium 120, or any combination thereof. For example, in those certain embodiments wherein the filter medium 120 is disposed between a first support layer and a second support layer, the molded rim 112 can be molded onto the first and second support layers to retain the filter medium 120 within the support frame 110. Further, in some embodiments, the support frame 110 can include a crimped portion that folds onto and retains the first and second support layers and this retains the filter medium 120 within the support frame 110.

As discussed above, a first support layer, such as the wire mesh.214, can be coupled with the filter medium 120 so as to provide additional strength and durability to the air filter 100. It is envisioned that in some embodiments, the wire mesh 214 can be positioned on an outer surface and an inner surface of the filter medium 120. In some embodiments, the wire mesh 214 can include of powder-coated aluminum screen wire that is co-pleated along with the filter medium 120 so as to reinforce the air filter 100. In some embodiments, the inner surface of the filter medium 120 can also include a wire mesh reinforcement. It is contemplated that the wire mesh supports can vary in rigidity. In some embodiments, additional or alternative reinforcements can be provided, as will be apparent to those skilled in the art.

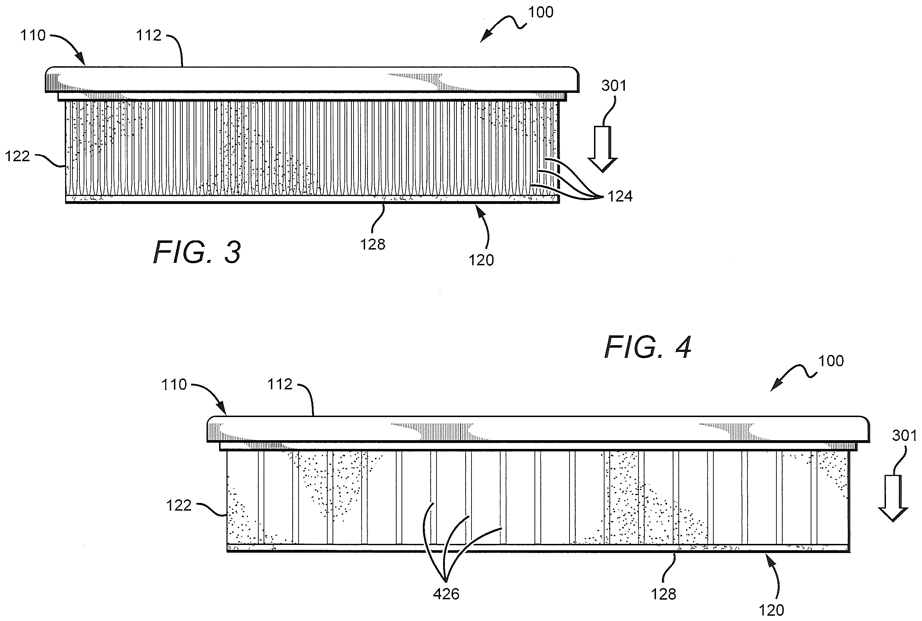

FIGS. 3 and 4 illustrate side views of the air filter 100, indicating a direction of airflow 301 passing through the air filter 100 from the support frame 110 (e.g., inlet side of the air filter 100) through the filter medium 120 (e.g., outlet side of the air filter 100). The air filter 100 generally includes a combination of two or more filter media layers forming a compound filter medium 120 configured to exhibit a relatively high filtration efficiency and a relatively low air pressure drop across the filter medium 120. In the embodiments illustrated in FIGS. 1-5, the air filter 100 includes a first media layer 122 and a second media layer 128 forming the compound filter medium 120, in which at least one of the foregoing media layers (or both) is configured to sequester airborne contaminants selected from at least particulate matter, volatile organic compounds (VOCs), and combinations thereof from air streamed through the compound filter medium 120. As such, the direction of airflow 301 passing through the air filter 100 of FIGS. 3 and 4 is from the support frame 110, through the first media layer 122, and, ultimately, through the second media layer 128.

The first media layer 122 can be formed into a pleated configuration including a multiplicity of pleats 124 (e.g., accordion pleats) so as to increase the surface area of the filter medium 120. It will be appreciated that an increase in the number or density of the pleats 124 increases the surface area of the filter medium 120. As best shown in FIGS. 1 and 3, the first media layer 122 can be disposed between the second media layer 128 and the support frame 110 such that inner-pleat folds (e.g., pleat fold lines or creases on the inlet side of the air filter 100) of the plurality of pleats 124 are coupled (e.g., adhered) to the support frame 110 and outer-pleat folds (e.g., pleat fold lines or creases on the outlet side of the air filter 100) of the plurality of pleats 124 are coupled (e.g., adhered) to the second media layer 128. Each outer-pleat fold of the outer-pleat folds can be coupled to the second media layer 128 along an entire length of the outer-pleat fold. For example, each outer-pleat fold of the outer-pleat folds can be adhered to the second media layer 128 along an entire length of the outer-pleat fold either continuously (e.g., line of adhesive along the length of the outer-pleat fold) or at discrete points (e.g., points of adhesive along the length of the outer-pleat fold) along an entire length of each of the outer-pleat folds. Each inner-pleat fold of the inner-pleat folds can be coupled to the support frame 110 at both ends of the inner-pleat fold. For example, each inner-pleat fold of the inner-pleat folds can be adhered to the support frame 110 at both ends of the inner-pleat fold while leaving the center free.

It is contemplated that the first media layer 122 can be constructed of a natural material (i.e., a material sourced from nature), a synthetic material, or a combination thereof. The natural material can include, but is not limited to, cotton, wool, flax, hemp, or the like, optionally formed into fibers, a paper product thereof, or a woven or felted textile thereof. The synthetic material can include, but is not limited to, polyester, aramid, acrylic, nylon, polyurethane, olefin, polylactide, carbon, or the like, optionally formed into fibers or a woven or felted textile thereof. Combinations of the natural material and the synthetic material can include woven or felted textiles of at least one of the foregoing natural-material fibers and at least one of the foregoing synthetic-material fibers. Other filter materials known in the art can also be used. As such, the first media layer 122 can be constructed of paper, foam, cotton, spun fiberglass, or other filter materials known in the art, woven or non-woven material, synthetic or natural, or any combination thereof. In some embodiments the first media layer 122 can be configured to remove VOCs from the airstream. For example, in some embodiments, the first media layer 122 can include a portion capable of removing VOCs from the airstream. It is envisioned that embodiments of the first media layer 122 can include components capable of removing VOCs from the airstream such as activated charcoal or similar materials known in the art.

In some embodiments, the first media layer 122, the second media layer 128, or both media layers can include an electrostatic portion that is configured to electrostatically attract and agglomerate particle contaminants within the air flowing through the air filter. It is contemplated that the electrostatic portion can include at least some fibers that are treated with a coating of antimicrobial molecules configured to destroy microbes. In some embodiments, the antimicrobial molecules can include positively charged molecules distributed around a. circumference some fibers of the first media layer 122 and configured to cooperate with polarized fibers disposed within the filter medium 120.

In some embodiments, the first media layer 122 can include a combination of one or more media layers, each having a unique appearance. The combination of one or more media layers can be configured to exhibit a relatively high filtration efficiency and a relatively low air pressure drop across the filter medium 120, and the unique appearance can be configured to indicate a preferred direction of airflow 301 through the filter medium 120. In one embodiment, the combination of one or more media layers includes a first media layer and a second media. The first media layer includes a first color (e.g., cream color) and the second media layer includes a second color (e.g., grey color). As will be appreciated, the first color indicates an air entry side of the filter medium 120, and the second color indicates an air exit side of the filter medium. It will be recognized that a variety of colors, shapes, symbols, logos, written instructions or the like can be used, without limitation, to indicate a preferred air entry side of the filter medium 120.

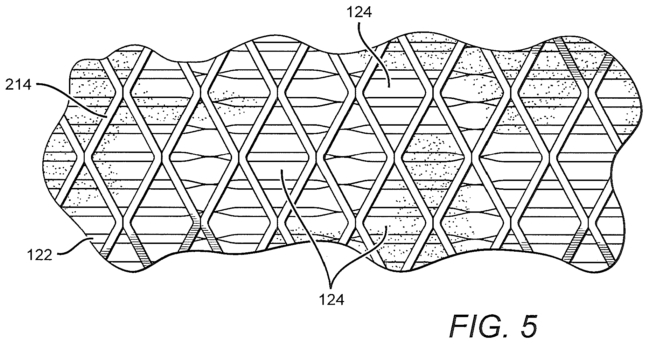

As best shown in FIGS. 4 and 5, the first media layer 122 can include a plurality of bosses or embossed shapes 426. The embossed shapes 426 can be positioned between the fold lines or creases of the pleats 124 such that they are disposed substantially on the sides of the pleats when the first media layer 122 is in the pleated configuration. In other words, the first media layer 122 can include the plurality of bosses 426 embossed (in sets) in the first media layer 122 between each inner-pleat fold of the inner-pleat folds (e.g., pleat fold lines or creases on the inlet side of the air filter 100) and an adjacent outer-pleat fold of the outer-pleat folds (e.g., pleat fold lines or creases on the outlet side of the air filter 100). The plurality of bosses 426 can be configured with a common or shared shape (e.g., line, triangle, etc.) and orientation (e.g., in direction of air flow through the air filter 100) to provide structural integrity to the first media layer 426 in the pleated configuration without obstructing air streamed through the air filter 100. The embossed shapes 426 of adjacent pleats 124 are longitudinally aligned such that apices of opposing embossed shapes 426 sharing a pleat fold line are in contact when the first media layer 122 is in the folded configuration. These embossed shapes 426 aide in maintaining a fold-to-fold pitch of the pleats in the spaced configuration while maintaining a minimal loss in surface area as well as operating to impart structural integrity to the first media layer 122, thereby mitigating deformation of the plurality of pleats and preserving filtration efficiency of the air filter. In some embodiments, the embossed shapes 426 include adhesive beads or strips configured to advantageously maintain a majority of their original shape while adhering adjacent pleats 124. The adhesive beads or strips can advantageously direct air through the first media layer 122 as shown in FIGS. 3 and 4 instead of allowing the air to escape through sides of the air filter 100. While the embossed shapes 426 in the present embodiment are disclosed as longitudinal and orientated substantially parallel with the direction of airflow 301, it should be understood that any orientation, shape and number of the embossed shapes 426 can be used that provide structural integrity with suitable air flow.

As described above, the filter medium 120 includes a second media layer 128 which can be incorporated into or coupled (e.g., adhered) to the first media layer 122. The second media layer 128 is configured to maintain a uniform distribution of the pleats 124 as best shown in FIG. 3. Preferably, the second media layer 128 includes a woven, fibrous material adhered to a downstream side of the first media layer 122, with respect to the direction of airflow 301.

It should be understood that the second media layer 128 can include materials other than the above mentioned woven, fibrous material, such as any of the natural materials, synthetic materials, or the combinations thereof described for the first media layer 122. The material including the second media layer 128 can be any material that is suitable for maintaining a uniform distribution of the pleats 124 while providing little or no resistance to airflow. For example, the second media layer 128 can include synthetic or natural materials, organic or inorganic materials, rigid or flexible materials, woven cotton or cotton fabric, a woven synthetic material such as nylon fabric, wire mesh, perforated plastic sheet, and the like.

It is contemplated that the second media layer 128 can be adhered to the first media layer 122 by way of any suitable fixation means known in the art, such as by way of non-limiting examples any of adhesive (e.g., glue), clips, staples, sewing, pins and the like. It is contemplated that the second media layer 128 can be affixed to the first media layer 122 by way of any one, or a combination of, the suitable fixation configurations. In one embodiment, the second media layer 128 is adhered to the first media layer 122 by way of one or more lines of a suitable adhesive disposed perpendicular to the pleats 124 and extends along a width of the first media layer 122. It is contemplated that any suitable adhesive can be used to adhere the first and second media layers 122, 128, without limitation. In some embodiments, the first and second media layers can be mechanically fastened together by way of , for example, a multiplicity of staples, one or more lines of thread, or a combination thereof.

In some embodiments, at least some of the fibers including the second media layer 128 can be treated with a coating of antimicrobial molecules configured to destroy microbes on contact. Preferably, the coating of antimicrobial molecules surrounds substantially the entire circumference of each fiber strand that is treated. In some embodiments, substances configured to release a fragrance can be incorporated into the second media layer 128 including the antimicrobial molecules. It is contemplated that the fragrance can be any natural substance, synthetic material, (incorporating aldehydes, ketones, esters, and other chemical constituents), or combinations thereof, which is known in the art and suitable for use in candles for imparting an odor, aroma, or fragrance. In some embodiments, suitable natural and synthetic fragrance/flavor substances can include those compiled by the U.S. Food and Drug Administration in Title 21 of the Code of Federal Regulations, Sections 172.510 and 172.515 respectively. In some embodiments, suitable fragrances include spice oil, flower oil, fruit oil, and the like. In some embodiments, suitable fragrances include fragrance components, such as for example benzaldehydes, phenols, cinnamic aldehydes and esters, octadienes, dienes, cyclohexadienes, terpenes, and the like. Further details regarding dispersion of aromas by way of air filters and fragrance compositions are disclosed in U.S. Patent Application Serial No. 10/544,157, entitled "Vehicle cabin air filter freshener," filed on August 13, 2003.

It should be understood that the air filter 100 described herein is not to be construed as limited solely to HVAC systems for treating air within vehicle cabins where passengers and drivers reside. Rather the air filter 100 can be used for internal combustion engine intakes or the like requiring filtered air. Vehicles, by way of non-limiting example, include automobiles, trucks, recreational vehicles, buses, earthmoving equipment and tractors with enclosed cabins, crane operator cabins, various cargo moving vehicles, locomotives, rail passenger cars, airplanes, helicopters, ship cabins, airship cabins, military vehicles, and the like. Moreover, the air filter 100 can be incorporated into other HVAC systems such as portable HVAC systems for treating air volumes commensurate with, for example, those of vehicle cabins.

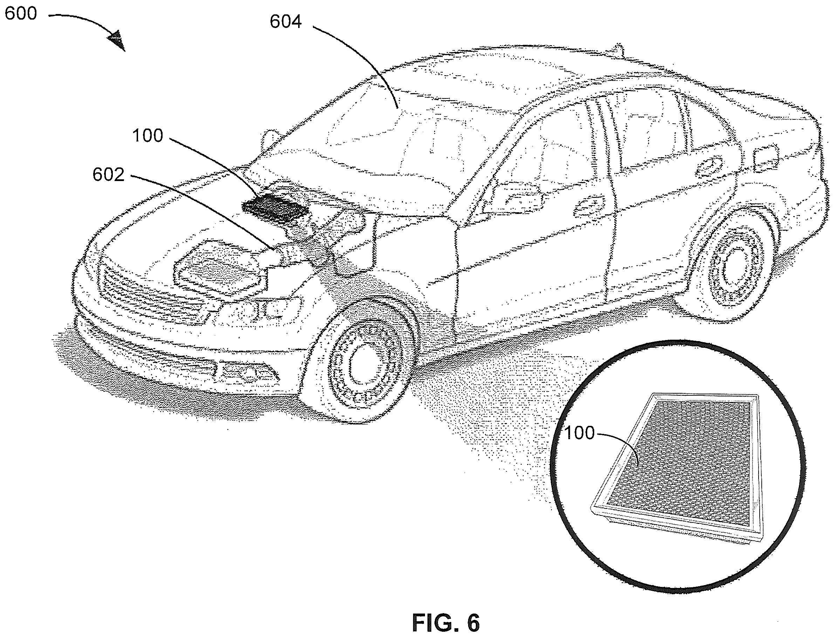

FIG. 6 illustrates an air filter in an air-filtering system of a vehicle in accordance with some embodiments. As shown, the compound air filter 100 is incorporated into a ventilation system 602 of a vehicle 600 so as to clean outside air drawn through the air filter 100 for a passenger compartment 604. The ventilation system 602 includes a fan configured to draw a stream of outside air through the compound air filter 100, wherein particulate matter, volatile organic compounds (VOCs), and other airborne contaminants are removed from the air. The fan then pushes a stream of clean air into a heater core or an air conditioning system before the passenger compartment 604.

### Methods

Methods for forming the compound air filter 100 configured to sequester airborne contaminants from air streamed through the air filter 100 can include coupling the second media layer 128 to the first media layer 122 to form the compound filter medium 120, molding the rim over the wire mesh 214 to form the support frame 110 for the compound filter medium 120, and coupling the compound filter medium 120 to the support frame 110 to form the compound air filter 100.

Coupling the second media layer 128 to the first media layer 122 can include coupling the second media layer 128 to the first media layer 122 having the pleated configuration including a plurality of pleats 124 to form the compound filter medium 120. Such coupling can include adhering the outer-pleat folds of the plurality of pleats 124 to the second media layer 128 either continuously or at discrete points along an entire length of each of the outer-pleat folds. As such, outer-pleat folds of the plurality of pleats 124 can be coupled or adhered to the second media layer 128 along an entire length of each of the outer-pleat folds.

Coupling the compound filter medium 120 to the support frame 110 can include disposing the compound filter medium 120 such that the first media layer 122 is between the second media layer 128 and the support frame 110. Such coupling can include adhering the inner-pleat folds of the plurality of pleats 124 to the support frame 110 at both ends of each of the inner-pleat folds. As such, inner-pleat folds of the plurality of pleats 124 can be coupled or adhered to the support frame 110 at both ends of each of the inner-pleat folds.

Methods for forming the compound air filter 100 can further include embossing the first media layer 122 with a plurality of bosses 426 configured with a shape and orientation to provide structural integrity to the first media layer 122 in the pleated configuration without obstructing air streamed through the air filter 100.

Methods for forming the compound air filter 100 can further include pleating the first media layer 122 into the pleated configuration such that the plurality of bosses 426 are set-wise embossed in the first media layer 122 between each inner-pleat fold of the inner-pleat folds and an adjacent outer-pleat fold of the outer-pleat folds.

## Claims

1. An air filter, comprising:
a compound filter medium (120) configured to sequester airborne contaminants from air streamed through the filter medium;
a first media layer (122) of the compound filter medium formed into a pleated configuration including a plurality of pleats and a plurality of bosses (426) embossed in the plurality of pleats ;
a second media layer (128) of the compound filter medium;
a rim molded over a wire mesh to form a support frame for the compound filter medium;
the plurality of bosses configured with a shape and orientation to provide structural integrity to the first media layer in the pleated configuration without obstructing air streamed through the air filter;
a support frame (110) configured to support the compound filter medium, wherein
the compound filter medium is coupled to the support frame to form an air filter configured to sequester airborne contaminants from air streamed through the air filter;
wherein the first media layer is disposed between the second media layer and the support frame such that inner-pleat folds of the plurality of pleats are coupled to the support frame at both ends of each of the inner-pleat folds and outer-pleat folds of the plurality of pleats are coupled to the second media layer along an entire length of each of the outer-pleat folds; and wherein at least one of said first and second media layers have an electrostatic portion including fibers treated with a coating of antimicrobial molecules configured to destroy microbes.

2. The air filter of claim 1, wherein each outer-pleat fold of the outer-pleat folds is coupled to the second media layer along an entire length of the outer-pleat fold.

3. The air filter of claim 1 or 2, wherein each inner-pleat fold of the inner-pleat folds is coupled to the support frame at both ends of the inner-pleat fold.

4. The air filter of claim 1, 2 or 3, wherein the support frame comprises a molded rim (112) along a perimeter of the filter medium, the rim configured for seating the air filter in an air-filtering system, and preferably wherein the air filter is configured to stream air through the air filter in a direction from the support frame to the second media layer.

5. The air filter of claim 4, wherein the support frame further comprises a wire mesh (214) fixed in the rim, the wire mesh configured to provide structural integrity to the support frame without obstructing air streamed through the air filter.

6. The air filter of any preceding claim, wherein the first media layer includes a plurality of bosses (426) embossed in the first media layer between each inner-pleat fold of the inner-pleat folds and an adjacent outer-pleat fold of the outer-pleat folds.

7. The air filter of any preceding claim, wherein the compound filter medium is configured to sequester airborne contaminants selected from particulate matter, volatile organic compounds (VOCs), and combinations thereof from air streamed through the filter medium.

8. A method, comprising:
coupling a second media layer (128) to a first media layer (122) to form a
compound filter medium (120), the first media layer having a pleated configuration including a plurality of pleats, wherein at least one of said first and second media layers have an electrostatic portion including fibers treated with a coating of antimicrobial molecules configured to destroy microbes;
embossing the first media layer with a plurality of bosses configured with a shape and orientation to provide structural integrity to the first media layer in the pleated configuration without obstructing air streamed through the air filter;
molding a rim over a wire mesh to form a support frame (110) for the compound filter medium; and
coupling the compound filter medium to the support frame to form an air filter configured to sequester airborne contaminants from air streamed through the air filter, wherein:
the first media layer is disposed between the second media layer and the support frame such that inner-pleat folds of the plurality of pleats are coupled to the support frame at both ends of each of the inner-pleat folds and outer-pleat folds of the plurality of pleats are coupled to the second media layer along an entire length of each of the outer-pleat folds.

9. The method of claim 8, wherein:
coupling the second media layer to the first media layer includes adhering the outer-pleat folds of the plurality of pleats to the second media layer either continuously or at discrete points along an entire length of each of the outer-pleat folds, and
coupling the compound filter medium to the support frame includes adhering the inner-pleat folds of the plurality of pleats to the support frame at both ends of each of the inner-pleat folds.

10. The method of claim 8 or 9, further comprising:
pleating the first media layer into the pleated configuration such that the plurality of bosses are set-wise embossed in the first media layer between each inner-pleat fold of the inner-pleat folds and an adjacent outer-pleat fold of the outer-pleat folds.

## Patentansprüche

1. Ein Luftfilter, umfassend:
ein Verbundfiltermedium (120), das so konfiguriert ist, dass es luftgetragene Verunreinigungen aus durch das Filtermedium strömender Luft abscheidet;
eine erste Medienschicht (122) des Verbundfiltermediums, die in einer gefalteten Konfiguration ausgebildet ist und eine Vielzahl von Falten sowie eine Vielzahl von in die Vielzahl von Falten eingeprägten Erhebungen (426) beinhaltet;
eine zweite Medienschicht (128) des Verbundfiltermediums;
ein über ein Drahtgeflecht geformter Rand zur Bildung eines Trägerrahmens für das Verbundfiltermedium;
wobei die Vielzahl von Erhebungen mit einer Form und Ausrichtung konfiguriert sind, so dass sie der ersten Medienschicht in der gefalteten Konfiguration strukturelle Integrität verleihen, ohne durch den Luftfilter strömende Luft zu behindern;
einen Trägerrahmen (110), der so konfiguriert ist, dass er das Verbundfiltermedium trägt, wobei das Verbundfiltermedium mit dem Trägerrahmen gekoppelt ist, um einen Luftfilter zu bilden, der so konfiguriert ist, dass er luftgetragene Verunreinigungen aus durch den Luftfilter strömender Luft abscheidet;
wobei die erste Medienschicht zwischen der zweiten Medienschicht und dem Trägerrahmen so angeordnet ist, dass innere Falten der Vielzahl von Falten an beiden Enden jeder der inneren Falten mit dem Trägerrahmen gekoppelt sind und äußere Falten der Vielzahl von Falten über eine gesamte Länge jeder der äußeren Falten mit der zweiten Medienschicht gekoppelt sind; und wobei mindestens eine der ersten und zweiten Medienschicht einen elektrostatischen Abschnitt aufweist, der Fasern beinhaltet, die mit einer Beschichtung aus antimikrobiellen Molekülen behandelt sind, die zur Zerstörung von Mikroben konfiguriert sind.

2. Der Luftfilter nach Anspruch 1, wobei jede äußere Falte der äußeren Falten über eine gesamte Länge der äußeren Falte mit der zweiten Medienschicht gekoppelt ist.

3. Der Luftfilter nach Anspruch 1 oder 2, wobei jede innere Falte der inneren Falten an beiden Enden der inneren Falte mit dem Trägerrahmen gekoppelt ist.

4. Der Luftfilter nach Anspruch 1, 2 oder 3, wobei der Trägerrahmen einen geformten Rand (112) entlang eines Umfangs des Filtermediums umfasst, wobei der Rand zum Aufnehmen des Luftfilters in einem Luftfiltersystem konfiguriert ist und wobei der Luftfilter vorzugsweise so konfiguriert ist, dass er Luft durch den Luftfilter in einer Richtung vom Trägerrahmen zur zweiten Medienschicht strömt.

5. Der Luftfilter nach Anspruch 4, wobei der Trägerrahmen ferner ein im Rand befestigtes Drahtgeflecht (214) umfasst, wobei das Drahtgeflecht konfiguriert ist, dem Trägerrahmen strukturelle Integrität zu verleihen, ohne durch den Luftfilter strömende Luft zu behindern.

6. Der Luftfilter nach einem vorstehenden Anspruch, wobei die erste Medienschicht eine Vielzahl von Erhebungen (426) beinhaltet, die in der ersten Medienschicht zwischen jeder inneren Falte der inneren Falten und einer angrenzenden äußeren Falte der äußeren Falten eingeprägt sind.

7. Der Luftfilter nach einem vorstehenden Anspruch, wobei das Verbundfiltermedium so konfiguriert ist, dass es aus durch das Filtermedium strömender Luft luftgetragene Verunreinigungen abscheidet, die aus Partikeln, flüchtigen organischen Verbindungen (VOCs) und Kombinationen davon ausgewählt sind.

8. Ein Verfahren, umfassend:
Koppeln einer zweiten Medienschicht (128) mit einer ersten Medienschicht (122), um ein Verbundfiltermedium (120) zu bilden, wobei die erste Medienschicht eine gefaltete Konfiguration aufweist, die eine Vielzahl von Falten beinhaltet, wobei mindestens eine der ersten und zweiten Medienschicht einen elektrostatischen Abschnitt aufweist, der Fasern beinhaltet, die mit einer Beschichtung aus antimikrobiellen Molekülen behandelt sind, die zur Zerstörung von Mikroben konfiguriert sind;
Prägen der ersten Medienschicht mit einer Vielzahl von Erhebungen, die mit einer Form und Ausrichtung konfiguriert sind, um der ersten Medienschicht in der gefalteten Konfiguration strukturelle Integrität zu verleihen, ohne durch den Luftfilter strömende Luft zu behindern;
Formen eines Randes über einem Drahtgeflecht, um einen Trägerrahmen (110) für das Verbundfiltermedium zu bilden; und
Koppeln des Verbundfiltermediums mit dem Trägerrahmen, um einen Luftfilter zu bilden, der so konfiguriert ist, dass er luftgetragene Verunreinigungen aus durch den Luftfilter strömender Luft abscheidet, wobei:
die erste Medienschicht zwischen der zweiten Medienschicht und dem Trägerrahmen so angeordnet ist, dass innere Falten der Vielzahl von Falten an beiden Enden jeder inneren Falte mit dem Trägerrahmen gekoppelt sind und äußere Falten der Vielzahl von Falten über eine gesamte Länge jeder der äußeren Falten mit der zweiten Medienschicht gekoppelt sind.

9. Das Verfahren nach Anspruch 8, wobei:
Koppeln der zweiten Medienschicht mit der ersten Medienschicht Anheften der äußeren Falten der Vielzahl von Falten an die zweite Medienschicht entweder kontinuierlich oder an diskreten Punkten entlang einer gesamten Länge jeder der äußeren Falten beinhaltet und
Koppeln des Verbundfiltermediums mit dem Trägerrahmen Anheften der inneren Falten der Vielzahl von Falten an den Trägerrahmen an beiden Enden jeder der inneren Falten beinhaltet.

10. Das Verfahren nach Anspruch 8 oder 9, ferner umfassend:
Falten der ersten Medienschicht in die gefaltete Konfiguration, so dass die Vielzahl der Erhebungen in der ersten Medienschicht zwischen jeder inneren Falte der inneren Falten und einer angrenzenden äußeren Falte der äußeren Falten satzweise eingeprägt ist.

## Revendications

1. Un filtre à air, comprenant :
un milieu filtrant composé (120) configuré pour séquestrer des contaminants aéroportés d'air diffusé à travers le milieu filtrant ;
une première couche de milieu (122) du milieu filtrant composé formée dans une configuration plissée incluant une pluralité de plis et une pluralité de bossages (426) embossés dans la pluralité de plis ;
une seconde couche de milieu (128) du milieu filtrant composé ;
un rebord moulé sur un treillis pour former un cadre de support pour le milieu filtrant composé ;
la pluralité de bossages étant configurée avec une forme et une orientation pour fournir une intégrité structurelle à la première couche de milieu dans la configuration plissée sans obstruction d'air diffusé à travers le filtre à air ;
un cadre de support (110) configuré pour supporter le milieu filtrant composé, dans lequel le milieu filtrant composé est couplé au cadre de support pour former un filtre à air configuré pour séquestrer des contaminants aéroportés d'air diffusé à travers le filtre à air ;
dans lequel la première couche de milieu est disposée entre la seconde couche de milieu et le cadre de support de sorte que des plis intérieurs de la pluralité de plis sont couplés au cadre de support aux deux extrémités de chacun des plis intérieurs et les plis extérieurs de la pluralité de plis sont couplés à la seconde couche de milieu le long d'une longueur entière de chacun des plis extérieurs ; et dans lequel au moins une desdites première et seconde couches de milieu présente une portion électrostatique incluant des fibres traitées avec un revêtement de molécules antimicrobiennes configurées pour détruire des microbes.

2. Le filtre à air selon la revendication 1, dans lequel chaque pli extérieur des plis extérieurs est couplé à la seconde couche de milieu le long d'une longueur entière du pli extérieur.

3. Le filtre à air selon la revendication 1 ou 2, dans lequel chaque pli intérieur des plis intérieurs est couplé au cadre de support aux deux extrémités du pli intérieur.

4. Le filtre à air selon la revendication 1, 2 ou 3, dans lequel le cadre de support comprend un rebord moulé (112) le long d'un périmètre du milieu filtrant, le rebord étant configuré pour placer le filtre à air dans un système de filtration d'air, et de préférence dans lequel le filtre à air est configuré pour diffuser de l'air à travers le filtre à air dans une direction à partir du cadre de support vers la seconde couche de milieu.

5. Le filtre à air selon la revendication 4, dans lequel le cadre de support comprend en outre un treillis (214) fixé dans le rebord, le treillis est configuré pour fournir une intégrité structurelle au cadre de support sans obstruction d'air diffusé à travers le filtre à air.

6. Le filtre à air selon une quelconque revendication précédente, dans lequel la première couche de milieu inclut une pluralité de bossages (426) embossés dans la première couche de milieu entre chaque pli intérieur des plis intérieurs et un pli extérieur adjacent des plis extérieurs.

7. Le filtre à air selon une quelconque revendication précédente, dans lequel le milieu filtrant composé est configuré pour séquestrer des contaminants aéroportés sélectionnés parmi de la matière particulaire, des composés organiques volatils (COV) et des combinaisons de ceux-ci à d'air diffusé à travers le milieu filtrant.

8. Un procédé comprenant :
le couplage d'une seconde couche de milieu (128) à une première couche de milieu (122) pour former un milieu filtrant composé (120), la première couche de milieu présentant une configuration plissée incluant une pluralité de plis, dans lequel au moins une desdites première et seconde couches de milieu présente une portion électrostatique incluant des fibres traitées avec un revêtement de molécules antimicrobiennes configurées pour détruire des microbes ;
l'embossage de la première couche de milieu avec une pluralité de bossages étant configurée avec une forme et une orientation pour fournir une intégrité structurelle à la première couche de milieu dans la configuration plissée sans obstruction d'air diffusé à travers le filtre à air ;
le moulage d'un rebord sur un treillis pour former un cadre de support (110) pour le milieu filtrant composé ; et
le couplage du milieu filtrant composé au cadre de support pour former un filtre à air configuré pour séquestrer des contaminants aéroportés à partir d'air diffusé à travers le filtre, dans lequel :
la première couche de milieu est disposée entre la seconde couche de milieu et le cadre de support de sorte que des plis intérieurs de la pluralité de plis sont couplés au cadre de support aux deux extrémités de chacun des plis intérieurs et les plis extérieurs de la pluralité de plis sont couplés à la seconde couche de milieu le long d'une longueur entière de chacun des plis extérieurs.

9. Le procédé selon la revendication 8, dans lequel :
le couplage de la seconde couche de milieu à la première couche de milieu inclut l'adhérence des plis extérieurs de la pluralité de plis à la seconde couche de milieu, soit continuellement, soit en des points discrets le long d'une longueur entière de chacun des plis extérieurs, et
le couplage du milieu filtrant composé au cadre de support inclut l'adhérence des plis intérieurs de la pluralité de plis au cadre de support aux deux extrémités de chacun des plis intérieurs.

10. Le procédé selon la revendication 8 ou 9, comprenant en outre :
le plissage de la première couche de milieu en une configuration plissée de sorte que la pluralité de bossages est embossée par groupes dans la première couche de milieu entre chaque pli intérieur des plis intérieurs et un pli extérieur adjacent des plis extérieurs.
